# EUROPEAN PATENT APPLICATION

(11) **EP 4 516 100 A1**
(43) Date of publication of application: **05.03.2025**
(21) Application number: 24197197.7
(22) Date of filing: 29.08.2024
(51) Int. Cl.: A01N 37/02, A01N 31/08, A01N 49/00, A01N 31/16, A01N 35/02, A01N 65/22, A01P 1/00

(54) **SANITIZING COMPOSITION FOR THE TREATMENT OF SURFACES IN THE FOOD SECTOR AND CLEANING METHOD USING THIS SANITIZING COMPOSITION**

(30) Priority: 31.08.2023 IT 202300017907
(71) Applicant: AEB SpA, 25134 Brescia (IT); Alma Mater Studiorum Universita di Bologna, 40126 Bologna (IT)
(72) Inventor: TOMASONI, Mario, 25134 Brescia (IT); LANCIOTTI, Rosalba, 40126 Bologna (IT); PATRIGNANI, Francesca, 40126 Bologna (IT); VANNINI, Lucia, 40126 Bologna (IT); SIROLI, Lorenzo, 40126 Bologna (IT); GOTTARDI, Davide, 40126 Bologna (IT)
(74) Representative: Botti & Ferrari S.p.A.

(57) **Abstract**

A sanitizing composition is described, comprising at least one essential oil of vegetal origin and/or a component thereof having an antimicrobial activity, at least one fatty acid having a number of carbon atoms between 8-12 carbons, and water. This sanitizing composition finds a useful application, in particular in the food industry sector for the antimicrobial treatment of surfaces of different types, of tools and equipment to be used in this field. A method for cleaning surfaces using a sanitizing composition as above is also described.

## Description

### Field of application

The present invention relates, in its more general aspect, to a sanitizing composition for surfaces.

In particular, the present invention relates to a sanitizing composition based on essential oils of vegetal origin and/or components thereof having an antimicrobial activity.

This sanitizing composition finds a useful application, particularly but not exclusively, in the food industry sector, especially for the antimicrobial treatment of surfaces.

The invention also relates to a method for cleaning surfaces using a sanitizing composition as above.

### Prior art

It is known that the surfaces intended for use in the food sector must be essentially free of pathogenic and degradative microorganisms.

The microbiological analysis of the surfaces is performed in all the cases in which a food or drink may be in direct contact with this surface.

Surfaces means workbenches, tools (knives, pots, cutting boards, etc.), equipment (refrigerators, slicers, etc.) which are used in food processing and the containers in which food is placed. This kind of analysis always falls in the perspective of preventing food poisoning and forms an integral part of the plans for controlling the critical points of potential contamination (HACCP) in the production process in order to ensure food safety. So much attention is paid to the microbiological analysis of surfaces because, following the manufacturing processes and if not properly cleaned and sanitized, they can represent a stock of nutrients which are able to promote the adhesion and proliferation of microorganisms which can contaminate food by direct (with the food) or indirect (via the operator) contact.

It is known that the microbial flora can be disseminated through air and water, through conveyance by the production personnel and/or by direct contact with the product.

As a consequence, although a surface has been disinfected according to the current regulations, it is not excluded that it may be a source of food contamination. For these reasons the cleaning and disinfection efficacy must be verified, through validated microbiological techniques.

These precautions are also necessary in frozen foods, and in the so-called RTE foods (that is, ready to use with no need for preparation), which are always becoming the majority in daily diet. In particular, the distribution of frozen foods must comply with very strict rules concerning the presence of certain bacteria. For example, in the United States if the presence of some bacteria, such as *Listeria monocytogenes* for example, is not reduced to zero, the import of these foods in this country may be prevented.

Moreover, because of the ability of some bacteria to survive and multiply even in the presence of disinfectants due to natural and/or induced microbial resistance mechanisms, the traditional formulations do not always have the required antibacterial efficacy.

Finally, it is known that some bacteria, such as *Listeria monocytogenes* (*L. monocytogenes*) and *Escherichia coli* (*E. coli*)*,* in particular conditions adhere to a surface and reach a particular cell density, starting to secrete a polymeric substance which is composed of polysaccharides, proteins and extracellular DNA.

This polymeric substance leads to the formation of a matrix in which bacterial cells are strongly rooted, forming the so-called "Biofilm". Traditional cleaners do not succeed in breaking this biofilm, likewise traditional disinfectants do not succeed in being active on the microbial forms contained in the biofilm. Traditional sanitization procedures are thus not often sufficient to eradicate the potentially contaminating microbial forms.

Moreover, it should be considered that traditional treatment products do not often meet the needs of using products with biocompatible and ecological features and there may be residues of these products in the final food.

US 2022/117225 describes a composition for removing biofilms comprising carvacrol, caprylic acid and propylene glycol. The final concentration of the components in the aqueous composition is up to 1.2 mM which shows the best results in the reduction of the biofilm formed by *Candida albicans.*

US 2012/252893 describes a composition containing a terpene (eugenol, carvacrol and E-2-Hexanal), a fatty acid C8-C12, a non-ionic surfactant and acetic acid, which would show a synergistic effect against the bacteria (*Salmonella spp*.) due to the combination of trans-2-Hexenal, organic acids and terpenes.

US 10 076 115 describes a sanitizing composition to be used on surfaces, which comprises 1-5% of one or more monocarboxylic acids selected from caprylic, capric and lauric acids, 10-40% of organic acids including acetic acid to give a pH of 1.2-5, 2-10% of one or more alcohols, an essential oil, a surfactant and at least 10% of water. The composition is intended to clean surfaces in contact with foods or non-foods after being diluted with water (1:64).

US 11 028 348 specifically relates to the removal of biofilms from surfaces using a concentrate of a cleaning and disinfecting composition and water. The concentrate comprises an organic acid, which may be acetic or citric acid (15-35%), 1-3% of a fatty acid, which may be capric or lauric acid, 3-35% of a surfactant, 3-6% of an alcohol, such as isopropanol or ethanol, and water.

US 2012/219682 describes an antimicrobial composition containing caprylic acid, lauric acid, oregano oil and water with a pH of 2-6.

EP 3 785 535 describes, in examples 1-3, antimicrobial compositions containing 2-2.5% of acetic acid, 1-7% of caprylic, capric and lauric acids, 0.5-1% of essential oils or components thereof including oregano oil, carvacrol and lemon balm essential oil, surfactants, ethanol or propylene glycol and water.

Chung Seo Young at al. "Efficacy of combined caprylic acid and thymol treatments for inactivation of Listeria monocytogenes on enoki mushrooms in household and food-service establishments", Food Research International, Elsevier, Amsterdam, Vol. 166. 16 February 2023 describes the synergistic antimicrobial effect of a composition comprising caprylic acid and thymol used to clean mushrooms in order to neutralize *Listeria monocytogenes* from the mushroom surface.

Radka Hulánková et al. "Inhibition of Listeria monocytogenes in minced beef by combined effect of oregano essential oil and caprylic acid" Maso International Brno, vol. 1. 1 January 2011 pages 11-14, describes antimicrobial compositions comprising oregano essential oil and octanoic acid, which are active against *Listeria monocytogenes.* The presence of citric acid is also described.

Kim S.A. et al. "Highly enhanced bactericidal effects of medium chain fatty acids (caprylic, capric and lauric acid) combined with edible plant essential oils (carvacrol, eugenol, [beta]-resorcylic acid, trans-cinnamaldehyde, thymol and vanillin) against Escherichia coli O157:H7" Food Control, vol. 60. 1 February 2016, pages 447-454 describes the enhanced synergistic bactericidal effect of compositions comprising fatty acids C8-C10 and essential oils, in particular carvacrol, eugenol and thymol, against *E. coli*; the diluted compositions comprise 2% of ethanol.

The technical problem underlying the present invention is to provide a sanitizing composition which has a greater antibacterial, antiproliferative and anti-biofilm efficacy, so as to overcome the drawbacks indicated above with reference to traditional products.

### Summary of the invention

This problem was solved by a sanitizing composition comprising at least one essential oil of vegetal origin and/or a component thereof having an antimicrobial activity selected from the group consisting of thyme essential oil and citral, at least one fatty acid having a number of carbon atoms between 8-12 carbons and water, wherein the amount of each essential oil and the amount of each component of essential oil are comprised, each, between 2.5-5%, by weight of the weight of the sanitizing composition.

Moreover, this technical problem is solved by a method for cleaning a surface comprising the steps of:
- providing a sanitizing composition as indicated above,
- possibly diluting said sanitizing composition with water,
- applying said sanitizing composition, possibly diluted, onto said surface and leaving it on said surface in contact for a pre-set time,
- rinsing said surface.

The above technical problem is also solved by the use of a sanitizing composition as defined above for the removal of one or both bacteria *Escherichia coli* and/or *Listeria monocytogenes,* from a surface.

Preferably, the above bacteria are on the surface in the form of biofilms.

As it will be demonstrated by the experimental results quoted in the detailed description of the invention, the thyme essential oil, the citral and the carvacrol, when used in combination together with at least one fatty acid having a number of carbon atoms between 8 and 12 in a composition according to the invention synergistically act on the separation of biofilms and on the ability to penetrate the biofilms themselves which are present on the treated surface.

The advantages and features of the sanitizing composition, according to the present invention, will be more apparent from the following detailed description and examples given by way of non-limiting examples with reference alle attached figures.

### Brief description of the drawings

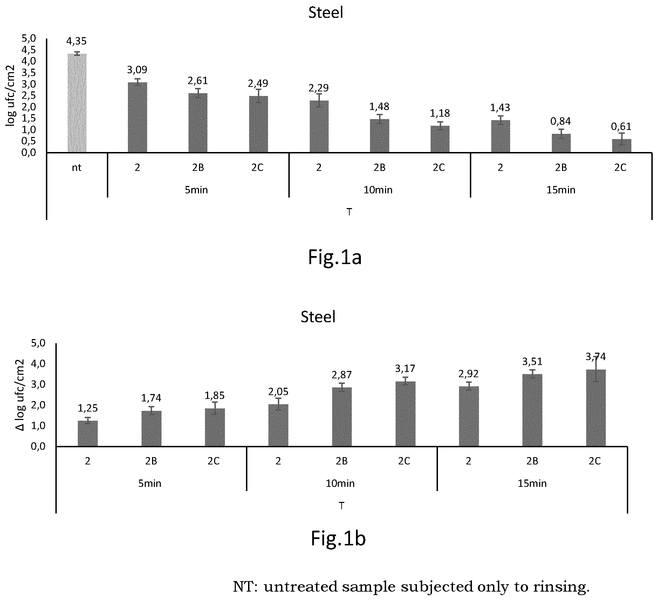

Figure 1a represents the *Listeria monocytogenes* NEM6 cellular load on the steel surfaces treated with a comparative sanitizing composition 2 and with compositions 2B and 2C according to the invention after 5, 10 and 15 minutes of treatment. NT is an untreated sample only subjected to rinsing.
Figure 1b represents the reduction of *Listeria monocytogenes* NEM6 cellular load, expressed as Δ log ufc/cm^{2.} on steel surfaces treated with the comparative sanitizing composition 2 and with the sanitizing compositions 2B and 2C according to the invention after 5, 10 and 15 minutes of treatment.

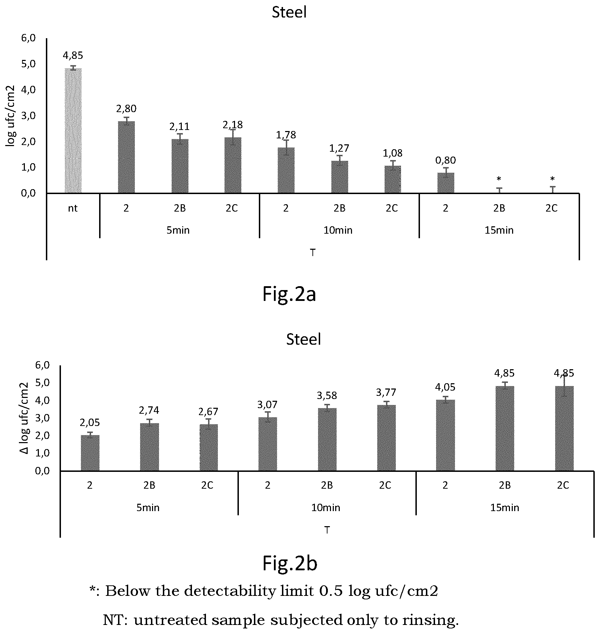

Figure 2a represents the *Listeria monocytogenes* Scott A cellular load, expressed as log ufc/cm^{2.} on steel surfaces treated with the comparative sanitizing composition 2 and with the sanitizing compositions 2B and 2C according to the invention after 5, 10 and 15 minutes of treatment. NT is an untreated sample only subjected to rinsing.
Figure 2b represents the reduction of *Listeria monocytogenes* Scott A cellular load, expressed as Δ log ufc/cm^{2.} on steel surfaces treated with the comparative sanitizing composition 2 and with the sanitizing compositions 2B and 2C according to the invention after 5, 10 and 15 minutes of treatment.

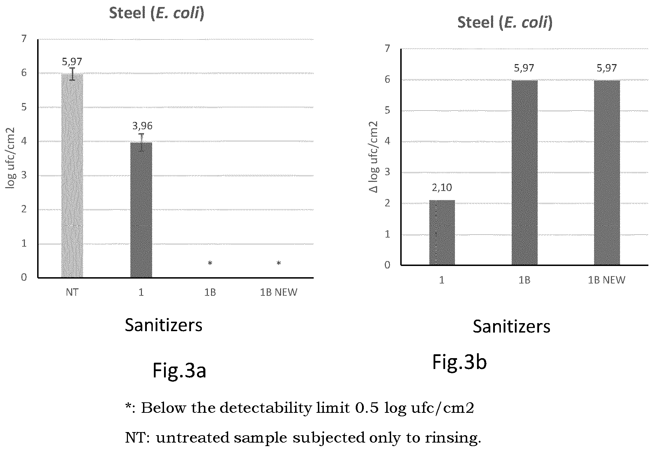

Figures 3a and 3b represent the cellular load, expressed as log ufc/cm^{2.} and the reduction of the cellular load, expressed as Δ log ufc/cm^{2.}, respectively, of *Escherichia coli* 555 (fresh Biofilm) on the steel surfaces treated with a comparative sanitizing composition 1 and with sanitizing compositions 1B and 1BNEW according to the invention for 15 minutes. NT is an untreated sample only subjected to rinsing.

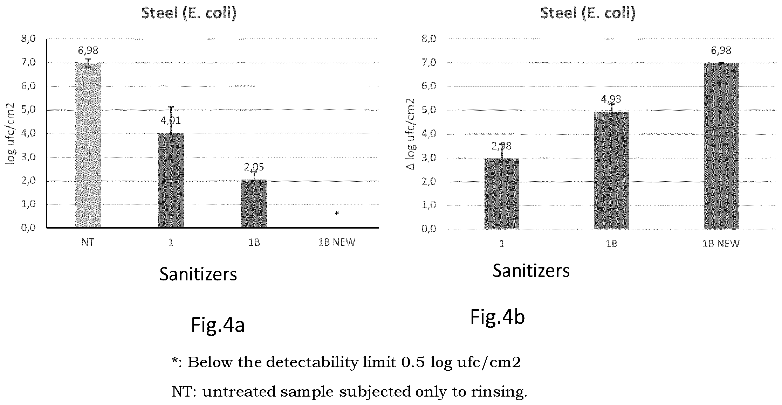

Figures 4a and 4b represent the cellular load, expressed as log ufc/cm² and the reduction of the cellular load, expressed as Δ log ufc/cm^{2.}, respectively, of *Escherichia coli* 555 (mature Biofilm) on steel surfaces treated with the comparative sanitizing composition 1 and with the sanitizing compositions 1B and 1BNEW according to the invention for 15 minutes. NT is an untreated sample only subjected to rinsing.

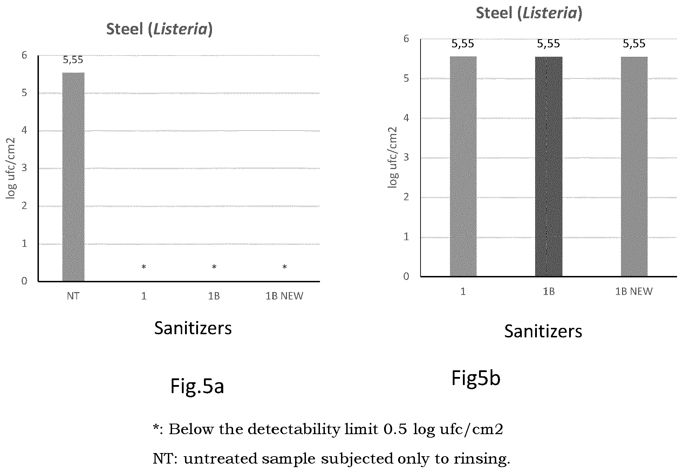

Figures 5a and 5b represent the cellular load, expressed as log ufc/cm^{2.} and the reduction of the cellular load, expressed as Δ log ufc/cm^{2.}, respectively, of *Listeria monocytogenes* NEM6 (fresh Biofilm) on steel surfaces treated with the comparative sanitizing composition 1 and with the sanitizing compositions 1B and 1BNEW according to the invention for 15 minutes. NT is an untreated sample only subjected to rinsing.

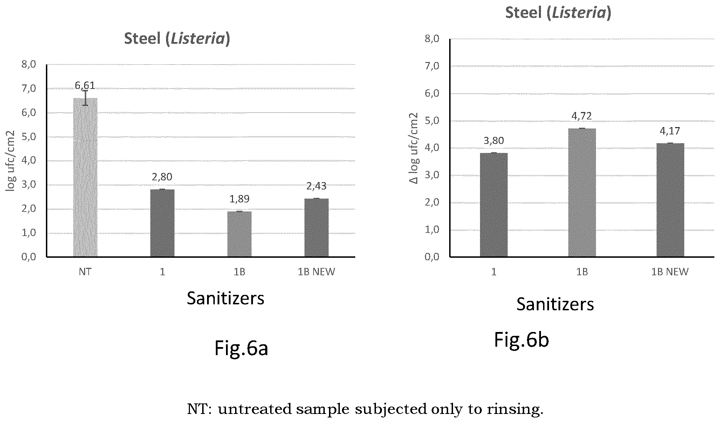

Figures 6a and 6b represent the cellular load, expressed as log ufc/cm^{2.} and the reduction of the cellular load, expressed as Δ log ufc/cm^{2.}, respectively, of *Listeria monocytogenes* NEM6 (mature Biofilm) on the steel surfaces treated with the comparative sanitizing composition 1 and with the sanitizing compositions 1B and 1BNEW according to the invention for 15 minutes. NT is an untreated sample only subjected to rinsing.

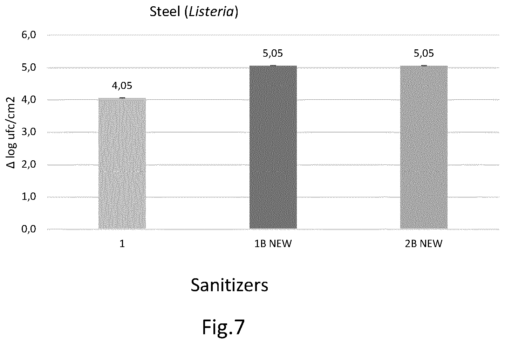

Figure 7 represents the reduction of the cellular load, expressed as Δ log ufc/cm^{2.} of *Listeria monocytogenes* NEM6 (mature Biofilm) on the steel surfaces treated with the comparative sanitizing composition 1 and with the sanitizing compositions 1BNEW and 2BNEW according to the invention for 15 minutes.

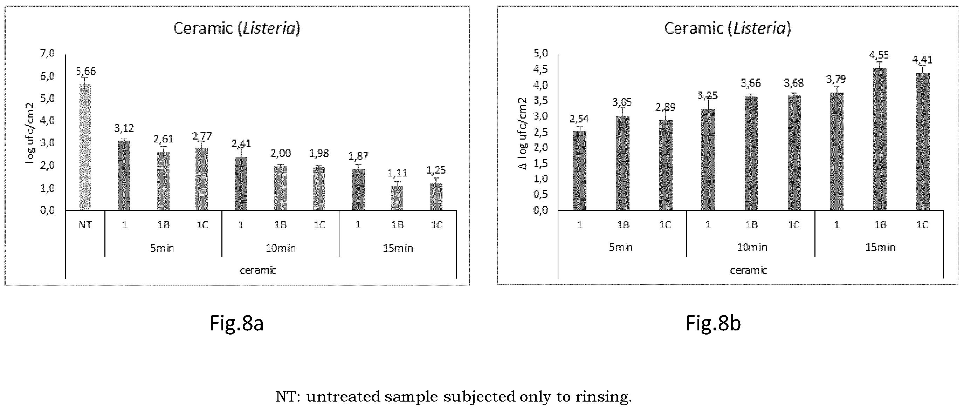

Figure 8a represents the *Listeria monocytogenes* NEM6 cellular load, expressed as log ufc/cm^{2.} on ceramic surfaces treated with the comparative sanitizing composition 1 and with the sanitizing compositions 1B and 1C according to the invention for 5, 10 and 15 minutes. NT is an untreated sample only subjected to rinsing.
Figure 8b represents the reduction of *Listeria monocytogenes* NEM6 cellular load, expressed as Δ log ufc/cm^{2.} on ceramic surfaces treated with the comparative sanitizing composition 1 and with the sanitizing compositions 1B and 1C according to the invention for 5, 10 and 15 minutes.

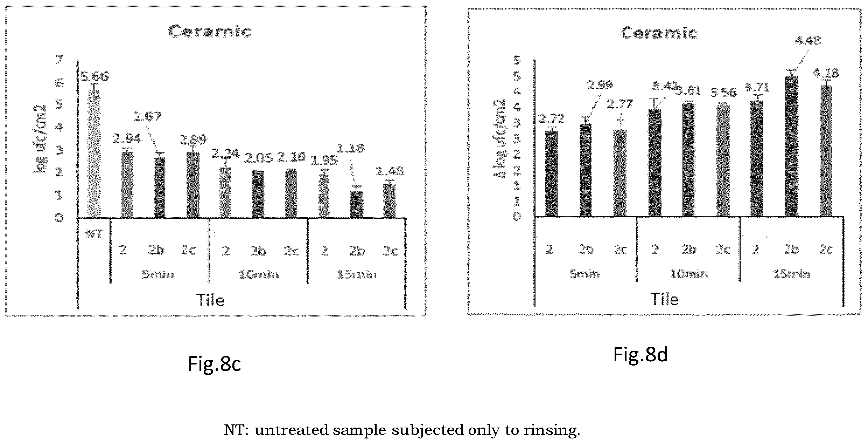

Figure 8c represents the *Listeria monocytogenes* NEM6 cellular load, expressed as log ufc/cm^{2.} on ceramic surfaces treated with the comparative sanitizing composition 2 and with the sanitizing compositions 2B and 2C according to the invention for 5, 10 and 15 minutes. NT is an untreated sample only subjected to rinsing.
Figure 8d represents the reduction of *Listeria monocytogenes* NEM6 cellular load, expressed as Δ log ufc/cm^{2.} on ceramic surfaces treated with the comparative sanitizing composition 2 and with the sanitizing compositions 2B and 2C according to the invention for 5, 10 and 15 minutes.

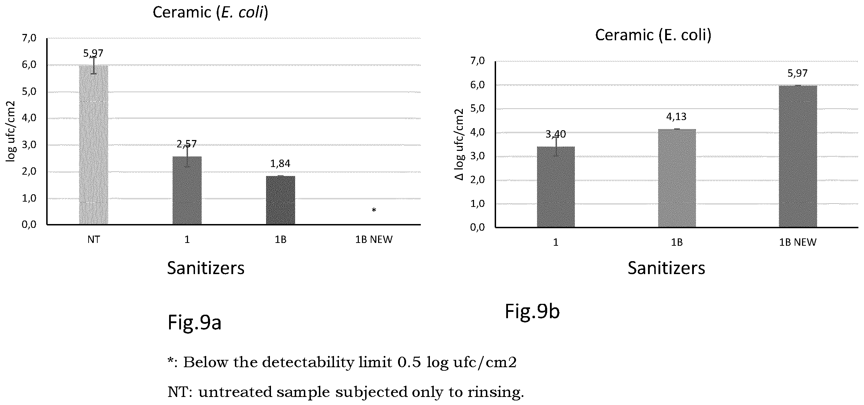

Figures 9a and 9b represent the cellular load, expressed as log ufc/cm^{2.} and the reduction of the cellular load, expressed as Δ log ufc/cm^{2.}, respectively, of *Escherichia coli* 555 (fresh Biofilm) on ceramic surfaces treated with the comparative sanitizing composition 1 and with the sanitizing compositions 1B and 1BNEW according to the invention for 15 minutes. NT is an untreated sample only subjected to rinsing.

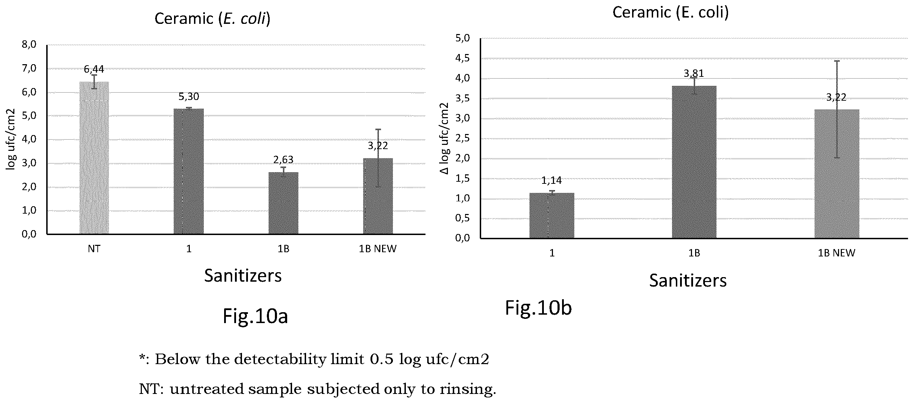

Figures 10a and 10b represent the cellular load, expressed as log ufc/cm^{2.} and the reduction of the cellular load, expressed as Δ log ufc/cm^{2.}, respectively, of *Escherichia coli* 555 (mature Biofilm) on ceramic surfaces treated with the comparative sanitizing composition 1 and with the sanitizing compositions 1B and 1BNEW according to the invention for 15 minutes. NT is an untreated sample only subjected to rinsing.

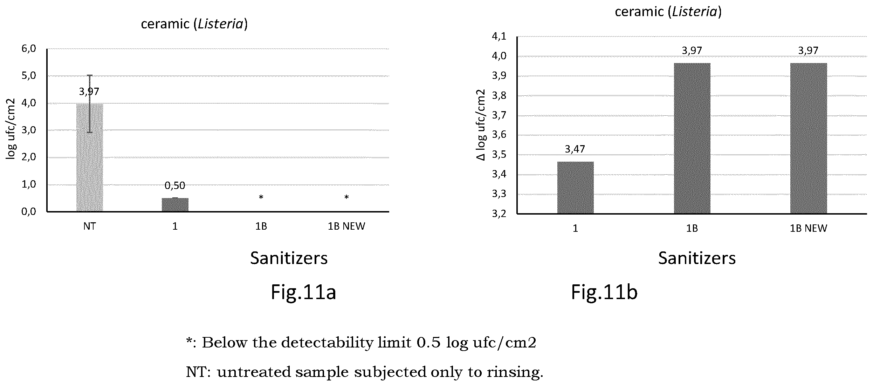

Figures 11a and 11b represent the cellular load, expressed as log ufc/cm^{2.} and the reduction of the cellular load, expressed as Δ log ufc/cm^{2.}, respectively, of *Listeria monocytogenes* NEM6 (fresh Biofilm) on ceramic surfaces treated with the comparative sanitizing composition 1 and with the sanitizing compositions 1B and 1BNEW according to the invention for 15 minutes. NT is an untreated sample only subjected to rinsing.

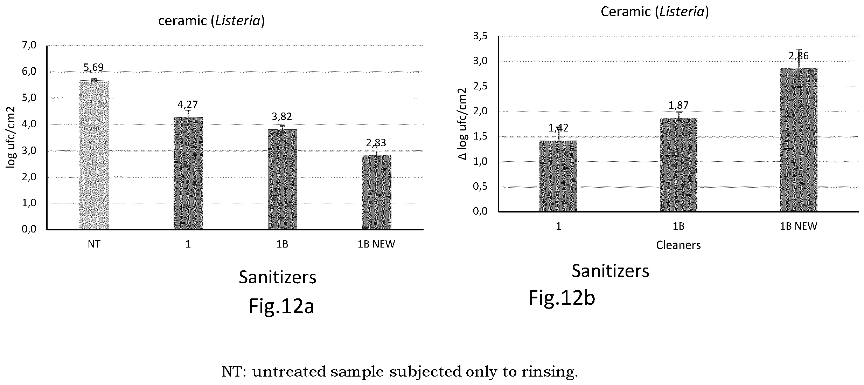

Figures 12a and 12b represent the cellular load, expressed as log ufc/cm^{2.} and the reduction of the cellular load, expressed as Δ log ufc/cm², respectively, of *Listeria monocytogenes* NEM6 (mature Biofilm) on ceramic surfaces treated with the comparative sanitizing composition 1 and with the sanitizing compositions 1B and 1BNEW according to the invention for 15 minutes. NT is an untreated sample only subjected to rinsing.

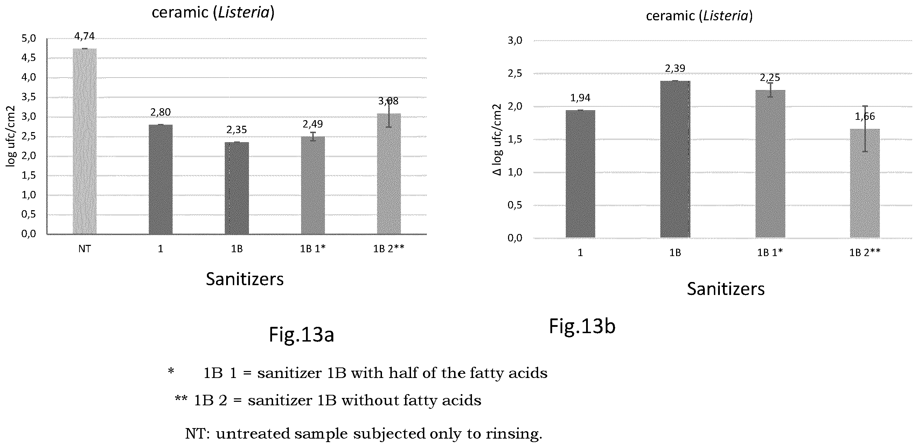

Figure 13a represents the *Listeria monocytogenes* NEM6 cellular load, expressed as log ufc/cm^{2.} on ceramic surfaces treated with the comparative sanitizing composition 1 and with the sanitizing compositions 1B, 1B 1 and 1B 2 according to the invention for 15 minutes. NT is an untreated sample only subjected to rinsing.
Figure 13b represents the reduction of *Listeria monocytogenes* NEM6 cellular load, expressed as Δ log ufc/cm^{2.} on ceramic surfaces treated with the comparative sanitizing composition 1 and with the sanitizing compositions 1B, 1B 1 and 1B 2 according to the invention for 15 minutes.

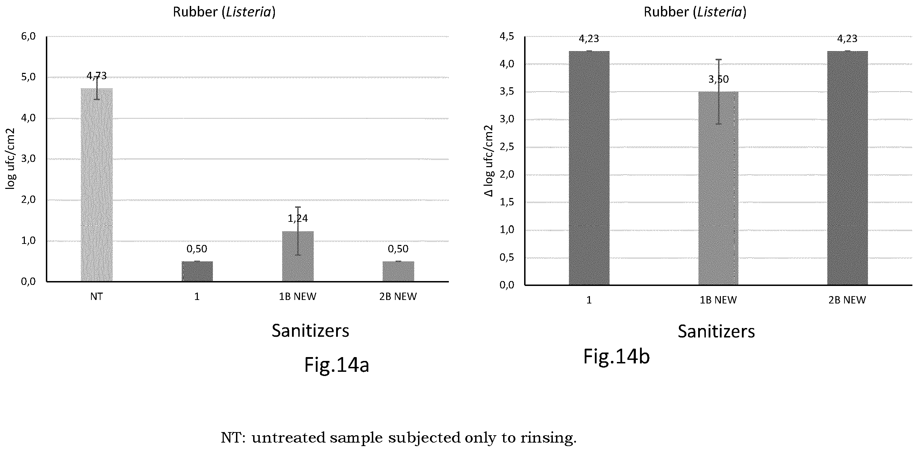

Figure 14a and Figure 14b represent the cellular load, expressed as log ufc/cm^{2.} and the reduction of the cellular load, expressed as Δ log ufc/cm^{2.}, respectively, of *Listeria monocytogenes* NEM6 (mature Biofilm) on the rubber surfaces treated with the comparative sanitizing composition 1 and with the sanitizing compositions 1BNEW and 2BNEW according to the invention for 15 minutes.

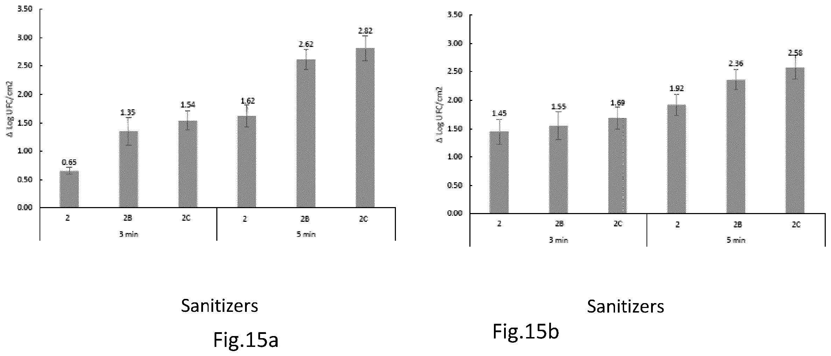

Figures 15a and 15b represent the reduction of the cellular load, expressed as Δ log ufc/cm^{2.} of *Listeria monocytogenes* Scott A and *Listeria monocytogenes* 56LY (mature Biofilm), respectively, on plastic (polypropylene) surfaces treated with the comparative sanitizing composition 2 and with the sanitizing compositions 2B and 2C according to the invention for 3 and 5 minutes.

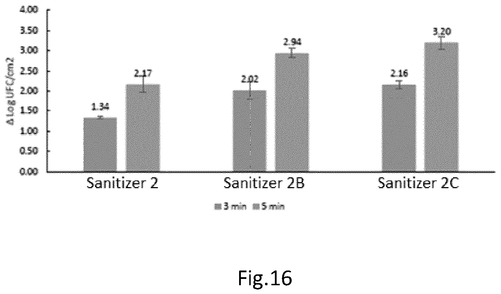

Figure 16 represents the reduction of the cellular load, expressed as Δ log ufc/cm^{2.} of *E*. *coli* 555 (mature Biofilm) on plastic (polypropylene) surfaces treated with the comparative sanitizing composition 2 and with the sanitizing compositions 2B and 2C according to the invention for 3 and 5 minutes.

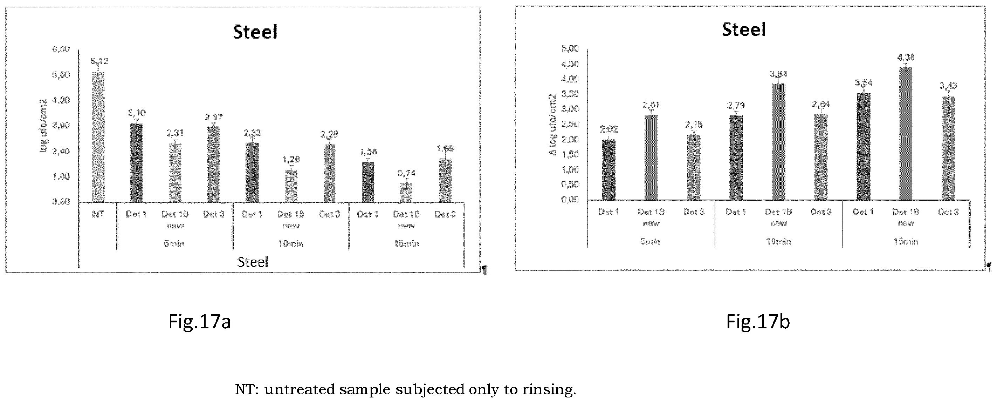

Figure 17a and Figure 17b represent the cellular load, expressed as log ufc/cm^{2.} and the reduction of the cellular load, expressed as Δ log ufc/cm^{2.}, respectively, of *Listeria monocytogenes* NEM6 (mature Biofilm) on steel surfaces treated with the comparative sanitizing compositions 1 and 3 and with the sanitizing composition 1BNEW according to the invention for 5, 10 and 15 minutes of treatment. NT is an untreated sample only subjected to rinsing.

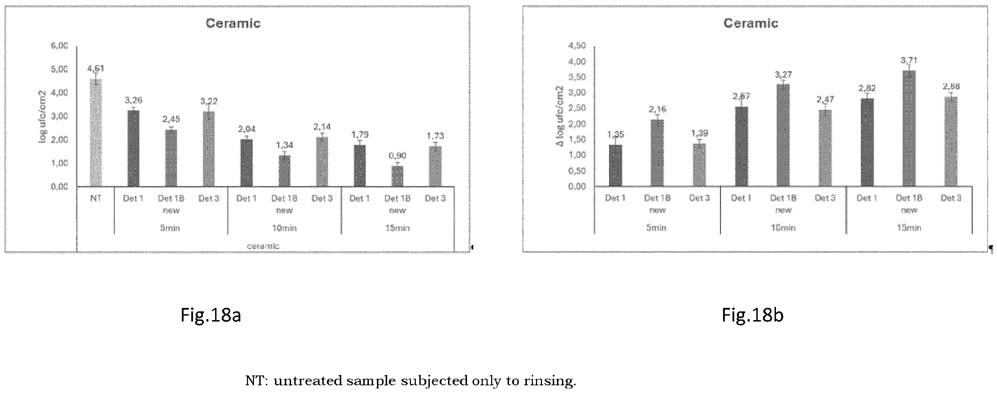

Figure 18a and Figure 18b represent the cellular load, expressed as log ufc/cm^{2.} and the reduction of the cellular load, expressed as Δ log ufc/cm^{2.}, respectively, of *Listeria monocytogenes* NEM6 (mature Biofilm) on ceramic surfaces treated with the comparative sanitizing compositions 1 and 3 and with the sanitizing composition 1BNEW according to the invention for 5, 10 and 15 minutes of treatment. NT is an untreated sample only subjected to rinsing.

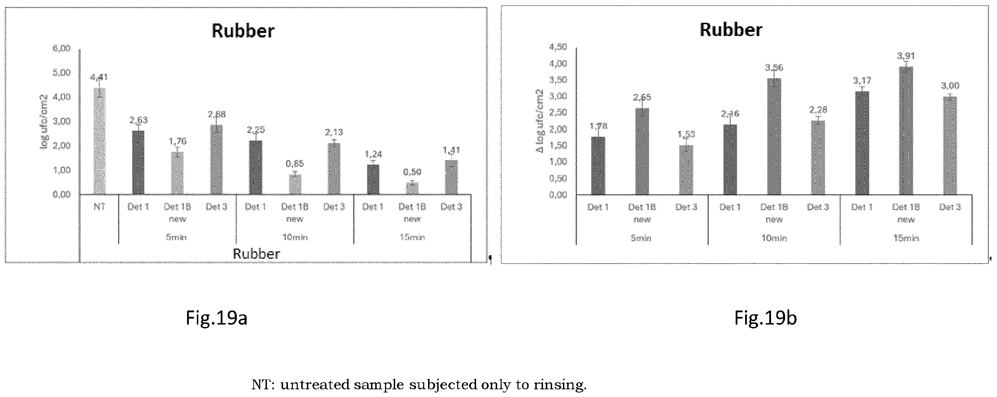

Figure 19a and Figure 19b represent the cellular load, expressed as log ufc/cm^{2.} and the reduction of the cellular load, expressed as Δ log ufc/cm^{2.}, respectively, of *Listeria monocytogenes* NEM6 (mature Biofilm) on rubber surfaces treated with the comparative sanitizing compositions 1 and 3 and with the sanitizing composition 1BNEW according to the invention for 5, 10 and 15 minutes of treatment. NT is an untreated sample only subjected to rinsing.

### Detailed description

In accordance with the present invention, the expressions "essential oil of vegetal origin" and "essential oil" are used interchangeably.

In the present description and in the attached claims, the term "sanitizer" referred to a composition means a composition which is able to eliminate microorganisms or to interrupt the growth and proliferation thereof, thus a composition having a "killer effect" against microorganisms in the planktonic phase or in the sessile phase. Expressions and terms such as "sanitizing", "disinfecting", "antimicrobial", "bactericidal", "biocidal" and the like always referred to a composition are to be understood as having the same meaning indicated above for the term "sanitizing" and therefore they can be used alternatively and indistinctly to this term, that is, these terms and expressions are considered as synonyms. All the above-indicated terms are used here regardless of the meaning assigned thereto by the various national and European legislations to differentiate the different certification levels as antimicrobial agents.

In the present description and in the attached claims, unless otherwise indicated, the amounts or percentages indicated for each component of the sanitizing composition according to the invention are to be understood by weight of the total weight of the composition (wet composition).

The sanitizing composition according to the invention contains thyme essential oil as an essential oil of vegetal origin having an antimicrobial activity and may contain other essential oils, preferably oregano essential oil.

The composition according to the invention contains citral as a component of the essential oil having an antimicrobial activity and may comprise other components of essential oils having an antimicrobial activity selected from carvacrol, thymol, E-2-Hexenal, eugenol or mixtures thereof. In the sanitizing composition according to the invention, the amount of each essential oil and the amount of each component of the essential oil are between 2.5-5% by weight of the weight of the sanitizing composition.

In an embodiment, the sanitizing composition of the invention comprises at least one fatty acid having eight carbon atoms (C8), at least one fatty acid having ten carbon atoms (C10) and at least one fatty acid having twelve carbon atoms (C12).

Examples of suitable fatty acids include caprylic acid (C8), acid capric (C10) and acid lauric (C12).

In a preferred embodiment, the sanitizing composition comprises thyme essential oil, citral and carvacrol.

Preferably, the sanitizing composition comprises a pH regulating agent.

The sanitizing composition according to the invention has an acid pH. This pH is generally between 1 and 6, preferably between 2.5 and 5. The acid pH of the sanitizing composition of the invention advantageously allows the anti-biofilm function thereof to be improved.

For this purpose, the composition of the invention preferably comprises a pH regulating agent which can also have a pH buffering capacity and/or further increase the antimicrobial activity of the composition, i.e. the pH regulating agent itself can have an antimicrobial activity.

Suitable pH regulating agents can be selected from organic acids, inorganic acids, mixtures thereof and buffers of organic and/or inorganic acids with respective salts. Suitable inorganic acids include phosphoric acid and sulfamic acid.

Suitable organic acids include acetic acid, citric acid, tartaric acid and glycolic acid.

Salts of the organic and/or inorganic acids can be selected from sodium, potassium, magnesium, zinc salts and mixtures thereof. Preferably, the salt of the organic or inorganic acid is a sodium salt.

In the sanitizing composition, the amount of the pH regulating agent and/or of the buffer can be between 1-15% by weight of the weight of the sanitizing composition, preferably between 2-10% by weight of the weight of the sanitizing composition.

In a preferred embodiment, the sanitizing composition according to the invention comprises acetic acid, citric acid and sodium citrate.

Advantageously, the citric acid and the citrate allow to increase the antimicrobial activity of the sanitizing composition and they perform, at the same time, a buffer effect which allows the pH to be regulated within a preset range.

As indicated above, the sanitizing composition according to the invention comprises at least one fatty acid having a number of carbon atoms between 8-12 carbons. Advantageously, the fatty acids having a number of carbon atoms between 8-12 carbons have antimicrobial properties and they have a synergistic action with the essential oils and components thereof so as to improve the antimicrobial action of the sanitizing composition obtaining an antimicrobial effect of the combination which is greater than the sum of the effect of the single components.

In the sanitizing composition according to the invention, the total amount of the fatty acids C8-C12 can be between 0.5 and 10% by weight of the weight of the sanitizing composition, preferably between 0.5-5% by weight of the weight of the sanitizing composition.

In an embodiment of the invention, the sanitizing composition according to the invention comprises, in addition to water, at least another solvent which solubilizes the essential oils and which is mixable with water. Preferably, the other solvent which is mixable with water is selected from an alcoholic solvent, a glycolic solvent and mixtures thereof. The alcoholic and/or glycolic solvents may be used to obtain improvements in the stability of the composition, in the foam control, in the viscosity of the composition and/or to provide a further antimicrobial enhancement.

The alcoholic solvent is a compound which has a single hydroxyl group (-OH) covalently bonded to a carbon atom inside the molecule. Suitable alcoholic solvents include ethanol.

Preferably the alcoholic solvent is ethanol.

Advantageously, where appropriate, the use of the alcoholic solvent, in particular ethanol, allows to convey the essential oils in aqueous solution and can enhance the antimicrobial effect thereof.

In the sanitizing composition according to the invention, the content of alcoholic solvent can be between 1% and 10%, preferably between 3% and 7% by weight of the weight of the composition.

The glycolic solvent is a compound which comprises at least 2 hydroxyl groups (-OH) covalently bonded to one or more carbon atoms inside the same molecule. The glycolic solvents used in the invention acts as solvents inside the compositions in which they are included, but they can be liquid or solid at room temperature. The glycolic solvent preferably comprises less than 20 carbon atoms, more preferably less than 16 carbon atoms. In a preferred embodiment, the glycolic solvent can be selected from the group consisting of diols C1-C6, triols C1-C6 and mixtures thereof. The propylene glycol is particularly preferred as a glycolic solvent.

In the sanitizing composition according to the invention, the content of glycolic solvent can be between 40% and 80%, preferably between 50% and 70% by weight of the weight of the composition.

The composition according to the invention can further comprise at least one surfactant which can be for example an anionic surfactant, a cationic surfactant, a non-ionic surfactant or mixtures thereof.

Suitable anionic surfactants include alkylsulfonates, ethersulfonates, alkyl sulfates, alkyl sulfates, alkylethersulfates, alkyl and/or alkenyl succinates, carboxylates (such as alkyletoxicocarboxylates) and mixtures thereof.

Suitable cationic surfactants include saturated or unsaturated betaines, amine oxides, alkyl morpholinium compounds, alkyltrimethylammonium compounds and mixtures thereof.

Suitable non-ionic surfactants include saturated or unsaturated, linear or branched alcohol alkoxylates, alkyl glycosides and mixtures thereof, amine oxides. Preferably, the suitable non-ionic surfactants are selected from the group comprising Tween 20, amine oxides and ethoxylated non-ionic surfactants. In an embodiment, the composition of the invention comprises a mixture of ethoxylated non-ionic surfactants, such as for example a mixture of PEG 26 Buteth 26 and PEG 40 Hydrogenated Castor oil.

In the sanitizing composition according to the invention, the total content of the surfactants can be between 1% and 25%, preferably between 3 and 20% by weight of the weight of the composition.

The composition according to the invention can be in the form of any liquid formulation such as a solution, suspension, emulsion, etc.

It has been found that the sanitizing compositions according to the invention based on natural antimicrobials such as thyme essential oil, citral and preferably carvacrol, are characterized by a high dispersing and antimicrobial efficacy, stability and eligibility for application on different surfaces. In particular, as it is more evident from the following examples, the sanitizing compositions according to the present invention proved to be particularly effective against *Listeria monocytogenes* and *Escherichia coli* biofilms.

Therefore, the sanitizing compositions according to the invention are suitable for the sanitization of surfaces in general and in particular of surfaces of tools and/or equipment used in the food industry. Surfaces which can be effectively sanitized with the composition according to the invention comprise steel, ceramic, plastic and rubber surfaces.

The above-described sanitizing composition can be used for the sanitization of the above surfaces as-is or it can be used in a diluted-in-water form.

The dilution ratio can vary within wide ranges depending on the desired concentration of active substances (in particular essential oils and/or components thereof in the composition diluted before being used to clean a surface.

Preferably, the dilution ratio by volume between the "concentrated" sanitizing composition and water can be between 1:25 and 1:100.

The application of the sanitizing composition onto the surface to be treated can be carried out in various ways, for example, by spraying or by means of a wipe or pad comprising the composition of the invention. Preferably, the application of the composition according to the invention is carried out by spraying.

Once applied, the composition is left on the application surface for a pre-set time with or without mechanical action. This time can be between 5 minutes and 20 minutes, for example 15 minutes.

Once this waiting time is elapsed, the surface can be rinsed with water so as to remove the sanitizing composition.

The present invention will be further described with reference to some examples, provided by way of non-limiting examples.

### Examples

Different sanitizing compositions according to the invention (1A, 1B, 1C; 2A, 2B, 2C) and sanitizing compositions not according to the invention (comparative sanitizing compositions 1 and 2), which are free of essential oils and components thereof and of fatty acids C8-C12, were prepared for comparison purposes. The components and the respective amounts by weight of each of the above compositions are shown in the following Table 1.

**Table 1**

| | Sanitizer 1 % (comp.) | Sanitizer 2 % (comp.) | Sanitizer 1a % (comp.) | Sanitizer 1b % (comp.) | Sanitizer 1c % (comp.) | Sanitizer 2a % (comp.) | Sanitizer 2b % (comp.) | Sanitizer 2c % (comp.) |
|---|---|---|---|---|---|---|---|---|
| Acetic acid | - | - | 2.5 | 2.5 | 2.5 | 3 | 3 | 3 |
| Citric acid | 2.5 | 3 | 2.5 | 2.5 | 2.5 | 3 | 3 | 3 |
| Buffer citrate | 2 | 1 | 2 | 2 | 2 | 1 | 1 | 1 |
| Lauric amine oxide | 1 | 3 | 1 | 1 | 1 | 3 | 3 | 3 |
| Myristic amine oxide | 2 | 2 | 2 | 2 | 2 | 2 | 2 | 2 |
| Ethanol | - | - | 5 | 5 | 5 | 5 | 5 | 5 |
| Citral | - | - | 5 | 3 | 3 | 5 | 3 | 3 |
| Thyme | - | - | 2.5 | 2 | 2.5 | 2.5 | 2 | 2.5 |
| Carvacrol | - | - | - | 3 | 2.5 | - | 3 | 2.5 |
| Fatty acid C12 | - | - | 0.5 | 1.5 | 1 | 0.5 | 1.5 | 1 |
| Tween 20 | - | - | 1.5 | 1.5 | 1.5 | 1.5 | 1.5 | 1.5 |
| Fatty acid C8 | - | - | 0.25 | 1.25 | 0.75 | 0.25 | 1.25 | 0.75 |
| Fatty acid C10 | - | - | - | 1 | 0.5 | - | 1 | 0.5 |
| Propylene glycol | 77.5 | 76 | 60.25 | 60.75 | 60.25 | 60.75 | 60.25 | 60.75 |
| Water | 15 | 15 | 15 | 11 | 13 | 12.5 | 9.5 | 10.5 |
| **Total** | 100 | 100 | 100 | 100 | 100 | 100 | 100 | 100 |

The above-listed ingredients were mixed until homogeneous and spray sanitizing compositions were prepared with the obtained mixture.

Before being tested in the diluted form with water, as it will be seen hereafter, the sanitizing compositions were subjected to pH analysis. The following table 2 shows the pH values of the comparative sanitizing compositions and according to the invention in the undiluted (concentrated) form and after 2% dilution.

**Table 2**

| Sample | Concentrated pH | 2% solution pH |
|---|---|---|
| Sanitizer 1 | 4.96 | 5.07 |
| Sanitizer 1A | 4.67 | 4.62 |
| Sanitizer 1B | 4.47 | 4.29 |
| Sanitizer 1C | 4.52 | 4.36 |
| Sanitizer 2 | 3.60 | 4.78 |
| Sanitizer 2A | 3.65 | 4.09 |
| Sanitizer 2B | 3.70 | 3.75 |
| Sanitizer 2C | 3.71 | 3.86 |

To evaluate the antimicrobial efficacy of sanitizing compositions according to the invention against cells in the planktonic phase of *Listeria monocytogenes* and *Escherichia coli,* the MIC (Minimum Inhibiting Concentration) values were determined, and thus the microorganism development/non-development, following the method quoted by Siroli et al. (Siroli L., Patrignani F., Serrazanetti D.I., Tabanelli G., Montanari C., Tappi S., Rocculi P., Gardini F., Lanciotti R. (2014). Efficacy of natural antimicrobials to prolong the shelf-life of minimally processed apples packaged in modify atmosphere. Food Control 46, 1-9. DOI: 10.1016/j.foodcont.2014.05.049. ISSN: 09567135). The microorganisms against which the antimicrobial activity was tested were *Listeria monocytogenes Scott A, Listeria monocytogenes 56LY* and *Escherichia coli 555.* The antimicrobial activity of the sanitizing compositions against target strains was evaluated towards a single level of inocula being equal to 5 log ufc/mL.

For MIC analysis the microbial strains obtained from overnight-grown cell cultures were diluted with culture broth (brain heart infusion, BHI), in order to obtain the desired cell concentration (5.0 log UFC/mL). For the analysis microtiter plates were used, using in the first well of each row of the plate the sanitizing compositions at an initial concentration being equal to 2 and 1.5% respectively. The remaining wells of each row were filled with concentrations being halved each time: 2%; 1%; 0.5%; 0.25%, 0.13%; 0.065%, and 1.5%; 0.75%; 0.38%; 0.19%; 0.09%; 0.045%.

The microtiter plates were incubated at 37 °C for 24h, after which the MIC values were determined based on the turbidity of the culture broth.

The following table 3 shows the MIC average values, expressed as % of sanitizing composition used which is able to inhibit the *Listeria monocytogenes* and *.Escherichia coli* target strains.

**Table 3**

| | *L. monocytogenes* SCOTT A | *L. monocytogenes* 56LY | *E. coli* 555 |
|---|---|---|---|
| | % | % | % |
| Sanitizer 1 | 0.5 | 0.22 | >2 |
| Sanitizer 2 | 0.45 | 0.18 | >2 |
| Sanitizer 1A | 0.35 | 0.16 | 1.58 |
| Sanitizer 1B | 0.22 | 0.08 | 0.50 |
| Sanitizer 1C | 0.18 | 0.13 | 0.52 |
| Sanitizer 2A | 0.16 | 0.16 | 1.67 |
| Sanitizer 2B | 0.18 | 0.08 | 0.50 |
| Sanitizer 2C | 0.16 | 0.11 | 0.44 |

As it can be observed from Table 3, the comparative sanitizing compositions 1 and 2, not comprising essential oil and essential oil components, showed a lower antimicrobial activity than the sanitizing compositions 1A, 1B and 1C according to the invention. Both comparative sanitizing compositions were not able to inhibit Escherichia coli even with the highest tested concentrations (being equal to 2%).

On the contrary, in the case of the sanitizing compositions 1A, 1B and 1C according to the invention, all three tested sanitizing compositions proved to be more active than the compared comparative sanitizing compositions.

Specifically, the sanitizing composition 1A proved to be less active against all the tested strains than the sanitizing compositions 1B and 1C which performed a more marked antimicrobial activity against both *Listeria monocytogenes* and *Escherichia coli.*

The comparative sanitizing composition 2 showed MICs which are similar to those observed in the case of the comparative sanitizing composition 1. The trend between the sanitizing compositions 2A, 2B and 2C according to the invention also proved to be similar to that described for the sanitizing composition 1A, 1B, 1C. In this case too, the sanitizing composition 2A proved to be less effective than the compositions 2B and 2C.

The sanitizing compositions were tested to evaluate the activity thereof against microbial biofilms, on pieces of materials/surfaces used in the food sector such as steel (10 cm x 10 cm), plastic (6 cm x 6 cm), brick/ceramic (15 cm × 15 cm) and rubber (6 cm x 6 cm).

For all surfaces, the bacterial biofilms were formed on the surface of the material through a per se conventional procedure in which the considered material was dipped in a culture broth containing the microorganism, for example *L. monocytogenes,* at a predetermined concentration (for example equal to 8.0 log ufc/ml) for a time of 2 days (fresh Biofilm) or 7 days (mature Biofilm) with or without refreshment of the culture medium (every 24 h).

Once the biofilm formation was completed, the surfaces were subjected to rinsing in water to separate the cells not adhering to the surface. Afterwards the treatments were performed in the different sanitizing compositions for different times (5-10-15 minutes), after which the surfaces were rinsed again in water. Afterwards the cells still adhering to the surfaces were collected by using surface pads. Finally, serial dilutions and samplings were performed in the ALOA culture medium which is selective for *Listeria monocytogenes* and BRIEC for the determination of *Escherichia coli.* The used sampling methods and techniques followed the indications of the UNI EN ISO 18593:2018 standard.

The reference was represented by a sample not subjected to treatment (NT) with any sanitizing composition but only to rinsing.

### Example 1: Anti-biofilm activity on steel

### Test 1a

A first test was performed on steel taking into consideration the following variables:
Tested sanitizing compositions
   - sanitizer 2B and 2C (diluted at 1% in water) according to the invention
   - sanitizer 2 (basic) not according to the invention (comparative) as a control (diluted at 1%).
Tested microorganisms
   - *L. monocytogenes* NEM6 (7-days mature Biofilm)
   - *L. monocytogenes* Scott A (7-days mature Biofilm)
Treatment time
   - 5 min
   - 10 min
   - 15 min

Figures 1a and 1b show the cellular load and the reduction of the cellular load, respectively, values expressed as Δ log ufc/cm^{2.}, of *Listeria monocytogenes* NEM6 following the different treatments. Figures 2a and 2b instead always show the cellular load and the reduction of the load, values expressed as Δ log ufc/cm^{2.}, of *Listeria monocytogenes* Scott A following the different treatments.

The detected starting biofilm had a cellular load which was equal to 4.35 log ufc/cm² in the case of the NEM6 strain and 4.85 log ufc/cm² in the case of the Scott A strain.

Regardless of the considered *Listeria monocytogenes* strain, a reduction of the pathogen load was observed even after 5 minutes of treatment. The NEM6 strain proved to be more resistant to treatments than the Scott A strain. The sanitizing compositions 2B and 2C according to the invention showed a greater reduction of the cellular load of both *Listeria monocytogenes* strains and for all the considered treatment times compared to the control sanitizer. In particular, in the case of the Scott A strain, the sanitizing compositions 2B and 2C led to the complete biofilm eradication after 15 minutes of treatment, reducing the *Listeria monocytogenes* load below the detectability limit with an overall reduction of more than 4.9 logarithmic cycles. Also in the case of the NEM6 strain a significant reduction of the pathogen was observed with a reduction of the cellular load after 15 minutes of treatment which is greater than 3.5 logarithmic cycles following the treatment with the sanitizing compositions 2B and 2C.

Even for shorter treatment times (5 and 10 min), the sanitizing compositions 2B and 2C according to the invention showed a greater antimicrobial activity compared to the sanitizer comparative 2. Obviously, by increasing the contact time with the sanitizing composition, the observed antimicrobial activity is increased. No significant differences were instead found in the antimicrobial effect between the sanitizing compositions B and C.

### Test 1b

A sanitizing composition according to the invention, called 1BNEW, was prepared, having the same components as the sanitizing composition 1B except for the fact that the Tween 20 and the propylene glycol were replaced with a mixture of ethoxylated non-ionic surfactants PEG 26 Buteth 26, PEG 40 Hydrogenated Castor Oil in an amount of 17% and adding water so as to maintain the same concentration (percentage by weight of the weight of the composition) as the composition 1B for the other components.

Firstly, the stability and foaming of the composition 1BNEW were evaluated and then the antimicrobial effect thereof against *Listeria monocytogenes* and *Escherichia coli* biofilms which was compared with the one of the composition 1B according to the invention and of the comparative composition 1.

Tested sanitizing compositions:
- sanitizer 1 (basic) not according to the invention (comparative) as a control (1.5% dilution in water)
- sanitizer 1B (formulated with propylene glycol) according to the invention (diluted at 1.5% in water)
- sanitizer 1BNEW (Sanitizing composition with replacement of propylene glycol and tween 20) according to the invention (diluted at 1.5% in water)

Tested microorganisms:
- *L. monocytogenes* NEM6
- *E. coli* 555

Treatment time:
- 15 min

Biofilm type:
- 2-days-dipping fresh Biofilm
- 7-days-dipping mature Biofilm
- Results:
   It was observed that the replacement of propylene glycol and tween 20 led to a greater foaming of the sanitizing composition diluted at 1.5%. The foaming of the sanitizing composition 1BNEW proved to be greater than the one of the sanitizing composition 1B and similar to the one observed for the sanitizing composition 1 not according to the invention, proving to be stable for all 15 minutes of treatment. As a consequence, the sanitizing composition 1BNEW has a greater foam stability over time compared to the sanitizing composition 1 B, thereby allowing to improve the contact time between the microorganisms contained in the biofilm and the sanitizing composition according to the invention.

The sanitizing compositions were then tested to evaluate the biofilm contrast effect on *Escherichia coli* fresh (2 days) and mature (7 days) Biofilms on steel surfaces.

Concerning the antimicrobial effect, as it can be observed in Figures 3a and 3b, the sanitizing compositions 1B and 1BNEW led, after 15 minutes of treatment, to the complete removal of the *Escherichia coli* fresh Biofilm which was equal to 5.97 log ufc/cm² unlike the sanitizing composition 1. The new sanitizing composition without propylene glycol and Tween20 did not reduce the antimicrobial efficacy of the sanitizing composition 1B on steel surfaces; in fact, the two sanitizing compositions showed a comparable efficacy against *Escherichia coli* fresh biofilms.

The efficacy of the sanitizing composition 1BNEW was also evaluated on *Escherichia coli* mature Biofilm (7 days) (Figures 4a and 4b). The sanitizing composition 1BNEW reduced the *Escherichia coli* level (initial load of 6.98 log ufc/cm²) below the detectability limit (0.5 log ufc/cm²), a value which is comparable to the sanitizing composition 1B. This reduction value of the *Escherichia coli* level by means of the sanitizing compositions 1B and 1BNEW is significantly greater than the one observed with the sanitizing composition 1 (Δ log ufc/cm² which is equal to about 3.0). In this particular case, the new sanitizing composition 1BNEW (without propylene glycol and tween 20) proved to be even more effective against *Escherichia coli* on steel surfaces compared to the sanitizing composition 1B.

The sanitizing composition 1BNEW was also tested on *L. monocytogenes* NEM6 fresh (Figures 5a and 5b) and mature (Figures 6a and 6b) biofilms.

All tested sanitizing compositions (1, 1B and 1NEW) proved to be extremely effective in removing *Listeria monocytogenes* fresh Biofilm. In fact, the observed removal of *Listeria monocytogenes* fresh Biofilm (5.55 log ufc/cm²) was almost complete for all sanitizing compositions with complete biofilm removal. In the case of *Listeria monocytogenes* mature Biofilm, the sanitizing compositions 1B and 1BNEW led to a reduction of the pathogen load which was greater than 4 logarithmic cycles and greater than those observed with the sanitizing composition 1 (see Figures 6a and 6b).

In confirmation of the previous tests, even against *Listeria monocytogenes* the new sanitizing compositions led to a greater efficacy than the sanitizing composition 1 not according to the invention compared on steel surfaces. Moreover, it can be observed that the effect of the sanitizing composition according to the invention is not reduced even in the absence of optional components such as propylene glycol and tween 20.

### Test 1c

A sanitizing composition according to the invention, called 2BNEW, was prepared having the same composition as the sanitizing composition 2B except for the fact that the Tween 20 and the propylene glycol were replaced with a mixture of ethoxylated non-ionic surfactants PEG 26 Buteth 26, PEG 40 Hydrogenated Castor oil in an amount of 17%.

The sanitizing composition 1BNEW according to the invention prepared as indicated above (see test 1b) and the sanitizing composition 2BNEW according to the invention were compared with the comparative sanitizing composition 1.

The conditions tested in the test are quoted below:
Tested sanitizing compositions:
   - sanitizer 1 (basic) not according to the invention (comparative) as a control (diluted at 1.5% in water)
   - sanitizer 1BNEW (sanitizing composition with replacement of propylene glycol and tween 20) according to the invention (diluted at 1.5% in water)
   - sanitizer 2BNEW (new sanitizing composition with replacement of propylene glycol and tween 20) according to the invention (diluted at 1.5% in water)
Tested microorganisms
   - *L. monocytogenes* NEM6
Treatment time:
   - 15 min
Biofilm type:
   - 7-days-dipping mature Biofilm

As shown in figure 7, the sanitizing compositions 1BNEW and 2BNEW, without propylene glycol and tween 20, proved to be again effective in reducing *Listeria monocytogenes* cellular load on steel surfaces. In fact, also in this test, starting from a biofilm of about 6 log ufc/cm^{2.}, reductions of more than 5 logarithmic cycles of *Listeria monocytogenes* were observed following the treatment with the solutions 1BNEW and 2BNEW. The observed load reduction was of about one logarithmic cycle higher than the one observed following the treatment with the sanitizing composition 1.

No differences were observed in the antimicrobial effect of the sanitizing compositions 1BNEW and 2BNEW according to the invention, indicating that both are very effective in removing *L. monocytogenes* biofilms and have an enhanced antimicrobial effect compared to the sanitizing composition 1 not according to the invention.

### Example 2: Anti-biofilm activity on ceramic/brick

### Test 2a

A first test was performed on ceramic taking into consideration the following variables:
Tested sanitizing compositions:
   - sanitizers 1B, 1C, 2B and 2C according to the invention (diluted at 1.5% in water)
   - sanitizers 1 and 2 (basic) not according to the invention (comparative) as a control (diluted at 1.5% in water)
Tested microorganisms:
   - *L. monocytogenes* NEM6 (7-days mature Biofilm)
Material: Ceramic
Treatment time:
   - 5 min
   - 10 min
   - 15 min

The reference was represented by a sample not subjected to treatment (NT) with any sanitizing composition but only subjected to rinsing.

In the first test performed on ceramic surfaces, the sanitizing compositions 1B and 1C according to the invention were tested compared to the comparative sanitizing composition 1 and the sanitizing compositions 2B and 2C according to the invention were tested compared to the comparative sanitizing composition 2. These sanitizing compositions were tested against *Listeria monocytogenes* NEM6 mature biofilms for treatment times of 5, 10 and 15 min. The obtained results are shown in Figures 8a and 8b concerning the comparison between the comparative sanitizing composition 1 and the sanitizing compositions 1B and 1C according to the invention, and in Figures 8c and 8d concerning the comparison between the comparative sanitizing composition 2 and the sanitizing compositions 2B and 2C according to the invention. The sanitizing compositions B and C proved to be extremely effective in removing the biofilm of *Listeria monocytogenes* NEM6 (extremely resistant strain) even on ceramic surfaces. In fact, the sanitizing compositions B and C according to the invention led to a reduction of the *Listeria monocytogenes* cellular load between 4.2 and 4.6 logarithmic cycles. This reduction was significantly greater than the one observed with the comparative sanitizing compositions 1 and 2 which led to a reduction of the pathogen load between 3.7 and 3.8 logarithmic cycles.

As observed on steel, the greatest differences in efficacy of the sanitizing compositions according to the invention compared to the comparative sanitizing compositions 1 and 2 were observed after 15 minutes of treatment. Even for shorter treatment times increases in the anti-biofilm activity were observed following treatments with the sanitizing compositions 1B, 2B and 1C and 2C according to the invention, compared to the comparative sanitizing composition 1.

Moreover, no particular differences in anti*-Listeria monocytogenes* efficacy on ceramic between the sanitizing compositions 1B, 1C, 2B and 2C were observed. In fact, all of them proved to be extremely effective in reducing the pathogen cellular load.

### Test 2b

The effect of the sanitizing composition 1BNEW prepared as indicated above (see test 1b), free of propylene glycol and tween 20, was evaluated compared to the sanitizing composition 1B. More in detail, the anti-biofilm effect of these sanitizing compositions on *Listeria monocytogenes* and *Escherichia coli* was evaluated.

Tested sanitizing compositions:
- sanitizer 1 (basic) not according to the invention (comparative) as a control (diluted at 1.5% in water)
- sanitizer 1B (diluted at 1.5% in water) according to the invention
- sanitizer 1BNEW (sanitizing composition with replacement of propylene glycol and tween 20) according to the invention (diluted at 1.5% in water)

Tested microorganisms:
- *L. monocytogenes* NEM6
- *E. coli* 555

Treatment time:
- 15 min

Biofilm type:
- 2-days-dipping fresh Biofilm
- 7-days-dipping mature Biofilm

The reference was represented by a sample not subjected to treatment (NT) with any sanitizing composition but only to rinsing.

### Results:

The sanitizing compositions were tested to evaluate the antimicrobial effect on *Escherichia coli* and *Listeria monocytogenes* fresh (2 days) and mature (7 days) biofilms on ceramic surfaces.

As it appears from Figures 9a and 9b, the sanitizing composition 1BNEW proved to be the only one which led, after 15 min of treatment, to the decrease in the *Escherichia coli* cellular load below the detectability limit (0.5 log ufc/cm²) leading to a reduction of more than 5.0 logarithmic cycles of the pathogen cellular load. The sanitizing composition 1B proved to be equally effective reducing by more than 4.0 log ufc/cm² the *Escherichia coli* load. The sanitizing composition 1 not according to the invention led instead to a reduction of 3.4 log ufc/cm² of *Escherichia coli.* The sanitizing composition 1BNEW free of propylene glycol did not reduce the antimicrobial efficacy of the sanitizing composition 1B on ceramic surfaces, showing instead an increased antimicrobial activity against *Escherichia coli* fresh biofilms (figures 9a and 9b).

The efficacy of the sanitizing composition 1BNEW was also evaluated on *Escherichia coli* mature Biofilm (7 days) (see figure 10a and figure 10b). The sanitizing composition 1B and the sanitizing composition 1BNEW led to a significant decrease in the *Escherichia coli* cellular load. In particular, the sanitizing composition 1BNEW free of propylene glycol and tween 20 proved to be similarly effective compared to the sanitizing composition 1B according to the invention and more effective than the comparative sanitizing composition 1 against *Escherichia coli* on ceramic surfaces.

The sanitizing composition 1BNEW was also tested on *L. monocytogenes* NEM6 fresh (figures 11a and 11b) and mature (figures 12a and 12b) biofilms.

As it can be observed in figures 11a and 11b, all sanitizing compositions 1B and 1BNEW according to the invention proved to be extremely effective in removing *Listeria monocytogenes* fresh Biofilm, almost completely removing the *Listeria monocytogenes* fresh Biofilm.

In the case of *Listeria monocytogenes* mature Biofilm, the sanitizing composition 1BNEW proved to be the most effective compared both to the sanitizing composition 1B and to the comparative sanitizing composition 1 not according to the invention (see figures 12a and 12b).

In the case of both *Escherichia coli* and *Listeria monocytogenes* it is possible to observe how the sanitizing composition 1BNEW without propylene glycol and tween 20 did not cause a decrease, but rather led to an increase in efficacy against pathogens compared to the sanitizing composition 1B, particularly against *Listeria monocytogenes.*

### Test 2c

The efficacy of sanitizing compositions, obtained by reducing or eliminating the presence of fatty acids in the sanitizing composition, against *L. monocytogenes* biofilms was evaluated. In this regard, a sanitizing composition according to the invention, called 1B1, was prepared having the same components as the sanitizing composition 1B from which it differs for a halved content of fatty acids (0.625% of fatty acid C8, 0.5% of fatty acid C10 and 0.75% of fatty acid C12), the content difference being compensated by the addition of water so as to maintain the same concentrations (in percentages by weight of the weight of the composition) which are present in the sanitizing composition 1B for the other components.

Moreover, a sanitizing composition not according to the invention (comparative), called 1B2, was prepared having the same components as the sanitizing composition 1B with the exception of the fatty acids C8, C10 and C12, the missing content of fatty acids in the composition 1B2 being compensated by the addition of water so as to maintain the same concentrations (in percentages by weight of the weight of the composition) which are present in the sanitizing composition 1B for the other components.

The test conditions are quoted below:
Tested sanitizing compositions:
   - sanitizer 1 (basic) not according to the invention (comparative) as a control (diluted at 1.5% in water)
   - sanitizer 1B 1 (having a halved content of fatty acids compared to the sanitizing composition 1B) according to the invention (diluted at 1.5% in water)
   - comparative sanitizer 1B 2 (free of fatty acids) not according to the invention (diluted at 1.5% in water)
Tested microorganisms:
   - *L. monocytogenes* NEM6
Treatment time:
   - 15 min
Biofilm type:
   - 7-days-dipping mature Biofilm

The reference was represented by a sample not subjected to treatment (NT) with any sanitizing composition but only to rinsing.

Figures 13a and 13b show the cellular load of *Listeria monocytogenes* (mature biofilms), expressed as log ufc/cm² and the reduction of the pathogen cellular load, expressed as Δ log ufc/cm², respectively, following the different treatments due to the applied sanitizing compositions.

The sanitizing compositions 1B and 1B 1 (halved concentration of fatty acids) are the compositions which showed the greatest efficacy causing a reduction of the *Listeria monocytogenes* cellular load which is equal to 2.4 and 2.3 log ufc/cm^{2.}, respectively, particularly compared to the comparative sanitizing composition 1.

Conversely, the comparative sanitizing composition 1B2 which is free of fatty acids showed a lower efficacy than the comparative sanitizing composition 1 in reducing the *Listeria monocytogenes* cellular load. This demonstrates the importance of the presence of fatty acids in the sanitizing composition according to the invention and, in particular, the synergistic action thereof with the essential oils and components thereof in the antimicrobial effect against *Listeria monocytogenes.*

### Example 3: Anti-biofilm activity on rubber

### Test 3a

The effect of the sanitizing compositions 1BNEW and 2BNEW prepared as indicated above (see test 1b and test 1c respectively), which are free of propylene glycol and tween 20, was evaluated with respect to the sanitizing composition 1B, and compared to the comparative sanitizing composition 1.

The conditions tested in the test are quoted below:
Tested sanitizing compositions:
   - sanitizer 1 (basic) not according to the invention (comparative) as a control (diluted at 1.5% in water)
   - sanitizer 1BNEW according to the invention (diluted at 1.5% in water)
   - sanitizer 2BNEW according to the invention (diluted at 1.5% in water)
Tested microorganisms:
   - *L. monocytogenes* NEM6
Treatment time:
   - 15 min
Biofilm type:
   - 7-days-dipping mature Biofilm

The reference was represented by a sample not subjected to treatment (NT) with any sanitizing composition but only to rinsing.

Figures 14a and 14b show the obtained results expressed as *Listeria monocytogenes* cellular load (log ufc/cm²) and reduction of the *Listeria monocytogenes* cellular load (Δ log ufc/cm²). The obtained data denote how all tested sanitizing compositions including 1BNEW and 2BNEW according to the invention showed an almost complete reduction of the cellular load of *Listeria monocytogenes* mature Biofilm, after 15 minutes of treatment.

### Example 4: Anti-biofilm activity on plastic

### Test 4a

The effect of the sanitizing compositions 2B and 2C was evaluated compared to the comparative sanitizing composition 2 on polypropylene surfaces.

The conditions tested in the test are quoted below:
Tested sanitizing compositions:
   - sanitizer 2 (basic) not according to the invention (comparative) as a control (diluted at 1% in water)
   - sanitizer 2B according to the invention (diluted at 1% in water)
   - sanitizer 2C according to the invention (diluted at 1% in water)
Tested microorganisms:
   - *L. monocytogenes* Scott A and 56LY
Treatment time:
   - 3 and 5 min
Biofilm type:
   - 7-days-dipping mature Biofilm

The reference was represented by a sample not subjected to treatment (NT) with any sanitizing composition but only to rinsing.

The obtained results expressed as *Listeria monocytogenes* Scott A and *Listeria monocytogenes* 56LY cellular load (log ufc/cm²) are shown in the following Table 4 while the obtained results expressed as a reduction of the *Listeria monocytogenes* Scott A and *Listeria monocytogenes* 56LY cellular load (Δ log ufc/cm²) are shown in Figure 15a and Figure 15b, respectively.

**Table 4**

| | *L. monocytogenes* SCOTT A | *L. monocytogenes* 56LY | *Treatment time (minutes)* |
|---|---|---|---|
| | log ufc/cm² | log ufc/cm² | |
| NT | 6.16±0.06 | 6.04t0.09 | 3 |
| Sanitizer 2 | 5.51±0.17 | 4.59±0.22 | 3 |
| Sanitizer 2B | 4.81±0.20 | 4.49±0.24 | 3 |
| Sanitizer 2C | 4.62±0.18 | 4.35±0.19 | 3 |
| NT | 5.83±0.22 | 5.86±0.15 | 5 |
| Sanitizer 2 | 4.21±0.21 | 3.94±0.19 | 5 |
| Sanitizer 2B | 3.63±0.19 | 3.50±0.18 | 5 |
| Sanitizer 2C | 3.01±0.20 | 3.28±0.21 | 5 |

As it can be observed in figures 15a and 15b, the reduction (Δ Log UFC/cm²) of the microbial load proved to depend on the treatment time, sanitizer type and considered *L. monocytogenes* strain. The microbial load observed in the sample NT (sample subjected only to rinsing) proved to be equal to 6.2 log ufc/cm² in the case of *L. monocytogenes Scott A* and 6.0 log ufc/cm² in the case of *L. monocytogenes 56LY.*

The use of the sanitizing compositions according to the invention always led to a reduction of the *Listeria* load. In the case of *L. monocytogenes* Scott A, just after 3 min of treatment it was possible to observe an increase in the antimicrobial activity of the compositions 2B and 2C (reduction of the *Listeria* load between 1.4 and 1.5 log ufc/cm²) compared to the basic sanitizer 2 (reduction of the *Listeria* load being equal to 0.7 log ufc/cm²). After 5 min, all sanitizing compositions showed a significant increase in the reduction of the *Listeria monocytogenes* Scott A load; however, the compositions 2B and 2C showed a pathogen reduction of about 1 logarithmic cycle higher than the basic composition 2. In the case of *L. monocytogenes* 56LY, the tested sanitizing compositions showed a similar antimicrobial efficacy therebetween after 3 min of treatment while after 5 min the sanitizing compositions 2B and 2C proved to be more effective (reduction of the *Listeria* load between 2.4 and 2.6 log ufc/cm²) than the sanitizing basic composition 2 (reduction of the *Listeria* load being equal to 1.9 log ufc/cm²).

The sanitizing compositions 2B and 2C according to the invention thus have an enhanced efficacy compared to the basic composition (Composition 2). No significant differences in terms of antimicrobial efficacy were instead observed between the compositions B and C.

### Test 4b

The effect of the sanitizing compositions 2B and 2C was evaluated compared to the comparative sanitizing composition 2 against *E.coli* on polypropylene surfaces.

The conditions tested in the test are quoted below:
Tested sanitizing compositions:
   - sanitizer 2 (basic) not according to the invention (comparative) as a control (diluted at 1% in water)
   - sanitizer 2B according to the invention (diluted at 1% in water)
   - sanitizer 2C according to the invention (diluted at 1% in water)
Tested microorganism:
   - *E. coli* 555
Treatment time:
   - 3 and 5 min
Biofilm type:
   - 7-days-dipping mature Biofilm

The reference was represented by a sample not subjected to treatment (NT) with any sanitizing composition but only to rinsing.

The obtained results expressed as E. *coli* 555 cellular load (log ufc/cm²) are shown in the following Table 5 while the obtained results expressed as a reduction of the E. *coli* 555 cellular load (Δ log ufc/cm²) are shown in Figure 16.

**Table 5**

| | *E. coli* 555 | *Treatment time (minutes)* |
|---|---|---|
| | log ufc/cm² | |
| NT | 7.34±0.03 | 3 |
| Sanitizer 2 | 6.00±0.23 | 3 |
| Sanitizer 2B | 5.32±0.10 | 3 |
| Sanitizer 2C | 5.18±0.03 | 3 |
| NT | 7.18±0.11 | 5 |
| Sanitizer 2 | 5.01±0.18 | 5 |
| Sanitizer 2B | 4.24±0.15 | 5 |
| Sanitizer 2C | 3.98±0.19 | 5 |

As it can be observed in Figure 16, the E. *coli* mature Biofilm (7 days) showed an initial cellular load on the surface which is equal to 7.3 log ufc/cm². Also in this case, the different sanitizing compositions led to a reduction of the biofilm cellular load just after 3 min of treatment. In the case of the comparative sanitizing composition 2, the observed reductions of the E. *coli* load were equal to 1.3 and 2.1 log ufc/cm² after 3 and 5 min of treatment, respectively. Differently, in the case of the sanitizing compositions 2B and 2C the reductions of the E. *coli* cellular load were higher than 2 logarithmic cycles just after 3 min of treatment and about 3 logarithmic cycles after 5 minutes of treatment.

Even against E. *coli* biofilms on polypropylene surfaces a greater antimicrobial activity by the sanitizing compositions 2B and 2C according to the invention was observed compared to the basic composition 2 (about 1 logarithmic cycle more of biofilm reduction after 5 min of treatment). Also in this case, although the formulation 2C showed a slight increase in the antimicrobial activity, no significant differences of the anti-biofilm effect against E. *coli* were observed between the sanitizing compositions according to the invention 2B and 2C.

### Example 5: Comparison between the anti-biofilm activity of a sanitizing composition according to the invention and of a basic sanitizing composition with and without the addition of orange oil

In this test, the following variables were taken into consideration:
Tested sanitizing compositions
   - sanitizer 1B NEW (diluted at 1% in water) according to the invention
   - sanitizer 1 (basic) not according to the invention (comparative) as a control (diluted at 1%),
   - sanitizer 3 not according to the invention (comparative) as a control (diluted at 1%) prepared with the same basic composition as the sanitizer 1BNEW but in which the fraction of essential oil of vegetal origin and components thereof were replaced by orange citrus oil.
Tested microorganisms
   - *L. monocytogenes* NEM6 (mature Biofilm 7 days)
Tested surfaces:
   - Steel
   - Ceramic
   - Rubber
Treatment time
   - 5 min
   - 10 min
   - 15 min

Figures 17a and 17b show the cellular load and the reduction of the cellular load, respectively, values expressed as Δ log ufc/cm^{2.}, of *Listeria monocytogenes* NEM6 following the different treatments on steel surfaces.

It can be noted that the sanitizer 1bnew according to the invention proved to be the most effective in eradicating *Listeria* biofilms on steel compared to the basic sanitizer 1 and to the sanitizer 3 in which the vegetal component according to the invention was replaced by orange oil. The greatest efficacy was recorded both after 5 minutes and after 10 and 15 minutes of treatment. In particular, after 15 minutes of treatment the formulation according to the invention reduced the *Listeria* load by 4.38 logarithmic cycles, about one logarithmic cycle more than what was observed by the comparative formulations which showed on the contrary a similar anti-*Listeria* efficacy.

Figures 18a and 18b show the cellular load and the reduction of the cellular load, respectively, values expressed as Δ log ufc/cm^{2.} of *Listeria monocytogenes* NEM6 following the different treatments on ceramic surfaces.

It can be noted that the *Listeria* initial load was equal to 4.61 log ufc/cm². Even on this surface, regardless of the treatment time, the cleaning composition 1Bnew according to the invention proved to be the most effective in eradicating *Listeria* biofilms. Just after 5 minutes of treatment the reduction of *Listeria* by the formulation 1Bnew was greater than 2 log ufc/cm² while in the comparative formulations it was between 1.35 and 1.39 log ufc/cm². The greater efficacy of the innovative formulation was also confirmed after 10 and 15 minutes of treatment. After 15 minutes, the reduction of *Listeria* proved to be greater than 3.7 logarithmic cycles with the innovative formulation while with the comparative formulations the reduction was lower than 3 log ufc/cm².

Figures 19a and 19b show the cellular load and the reduction of the cellular load, respectively, values expressed as Δ log ufc/cm^{2.} of *Listeria monocytogenes* NEM6 following the different treatments on rubber surfaces (conveyor belt).

In the case of rubber surfaces, the *Listeria* initial biofilm was equal to 4.41 log ufc/cm². As observed in the other surfaces, also in this case the formulation 1Bnew according to the invention proved to be the most effective in eradicating *Listeria* biofilms compared to the comparative formulations. As in the previous tests, the new formulation led to a reduction of the *Listeria* load of about one logarithmic cycle more than what was observed with the comparative formulations after both 5 and 10 and 15 minutes of treatment. As in the previous cases, the comparative formulation with orange oil did not show further reductions of the *Listeria* load compared to those observed with the basic formulation.

In conclusion, the sanitizing composition according to the invention containing specific amounts of essential oil of vegetal origin and suitably selected components thereof, involves a greater efficacy in eradicating *Listeria* biofilms compared both to the basic formulation without vegetal extracts and to the comparative formulation in which the selected vegetal extracts were replaced with citrus extracts (orange oil). The use of the formulation with orange oil did not lead instead to an increase in the anti-listeria efficacy compared to the comparative basic formulation.

## Claims

1. A sanitizing composition comprising at least one essential oil of vegetal origin and/or a component thereof having an antimicrobial activity selected from the group consisting of thyme essential oil and citral, at least one fatty acid having a number of carbon atoms between 8-12 carbons, and water, wherein the amount of each essential oil and the amount of each component of essential oil are comprised, each, between 2.5-5% by weight of the weight of the sanitizing composition.

2. The sanitizing composition according to claim 1, further comprising oregano essential oil.

3. The sanitizing composition according to claim 1 or 2, further comprising carvacrol, thymol, E-2-Hexenal, eugenol or mixtures thereof.

4. The sanitizing composition according to any one of the preceding claims, comprising thyme essential oil, citral and carvacrol.

5. The sanitizing composition according to any one of the preceding claims, comprising at least one fatty acid having eight carbon atoms (C8), at least one fatty acid having ten carbon atoms (C10) and at least one fatty acid having twelve carbon atoms (C12).

6. The sanitizing composition according to any one of the preceding claims, further comprising at least one pH regulating agent, said pH regulating agent being preferably selected from acetic acid, citric acid, tartaric acid, glycolic acid, sodium citrate, and combinations thereof.

7. The sanitizing composition according to claim 6, wherein the amount of at least one pH regulating agent is between 1-15%, preferably between 2-10%, by weight of the weight of the sanitizing composition.

8. The sanitizing composition according to any one of the preceding claims, wherein the composition has a pH between 1 and 6, preferably between 2.5 and 5.

9. The sanitizing composition according to any one of the preceding claims, wherein the total amount of said at least one fatty acid having a number of carbon atoms between 8-12 carbons is between 0.5 and 10% by weight of the weight of the sanitizing composition, preferably between 0.5-5%, by weight of the weight of the sanitizing composition.

10. The sanitizing composition according to any one of the preceding claims, further comprising at least one alcoholic solvent in an amount between 1% and 10%, preferably between 3% and 7%, by weight of the weight of the composition and/or comprising at least one glycolic solvent in an amount between 40% and 80%, preferably between 50% and 70% by weight of the weight of the composition.

11. The sanitizing composition according to any one of the preceding claims, further comprising at least one surfactant selected from anionic surfactant, cationic surfactant and non-ionic surfactant or mixtures thereof, preferably said composition comprises non-ionic surfactants selected from the group consisting of Tween 20, amine oxides, ethoxylated non-ionic surfactants and combinations thereof, preferably said composition comprises carboxylated non-ionic surfactants, and wherein the total amount of said at least one surfactant is between 1% and 25%, preferably between 3% and 20% by weight of the weight of the composition.

12. A method for cleaning a surface comprising the steps of:
- providing a sanitizing composition according to any one of the preceding claims,
- possibly diluting said sanitizing composition with water,
- applying said sanitizing composition, possibly diluted, onto said surface and leaving it on said surface for a pre-set time,
- rinsing said surface.

13. The method according to claim 12, wherein in said sanitizing composition the dilution ratio by volume between the sanitizing composition and water is between 1:25 and 1:100.

14. A use of a sanitizing composition according to any one of the preceding claims 1 to 11, for the removal of one or both bacteria *Escherichia coli* and/or *Listeria monocytogenes,* from a surface.

15. The use according to claim 14, wherein said bacteria are present on said surface in the form of biofilms.
